# EUROPÄISCHE PATENTANMELDUNG

(11) **EP 1 153 734 A2**
(43) Veröffentlichungstag der Anmeldung: **14.11.2001**
(21) Anmeldenummer: 01106235.3
(22) Anmeldetag: 14.03.2001
(51) Int. Cl.: B30B 5/02, F16B 11/00, C09J 5/06

(54) **Vorrichtung zum Verbinden zweier Bauteile durch Verkleben**

(30) Priorität: 09.05.2000 DE 20008317 U
(71) Anmelder: Schmidt, Dieter, 93055 Regensburg (DE)
(72) Erfinder: Schmidt, Dieter, 93055 Regensburg (DE)
(74) Vertreter: Graf, Helmut, Dipl.-Ing.

(57) **Zusammenfassung**

Die Erfindung bezieht sich auf eine neuartige Ausbildige einer Vorrichtung zum Verbinden wenigstens zweier Bauteile (2,3) durch Verkleben an einander benachbarten Flächen entlang eines Klebespaltes (8) oder eines Klebebereichs, mit zwei Werkzeugteilen (5,6) zwischen den die Bauteile (2,3) zum Verkleben angeordnet werden können und die Anlageflächen für die Bauteile (2,3) bilden.

## Beschreibung

Die Erfindung bezieht sich auf eine Vorrichtung gemäß Oberbegriff Patentanspruch 1.

Bekannt ist eine Vorrichtung (W0 87/07557), mit der Bauteile oder Komponenten mittels eines auf Hitze reagierenden Klebers und unter Verwendung eines heißen dampfförmigen Mediums und anschließend von kühlender Luft miteinander verklebt werden können. Bekannt ist ferner speziell auch eine Vorrichtung (EP 0 723 853), mit der Bauteile von Automobilen unter Anwendung von heißer Luft (in einer Heizphase) und anschließend von kalter Luft (in einer Kühlphase) und unter Verwendung eines bei Erwärmung aushärtenden Klebers miteinander verbunden werden können.

Bei den bekannten Vorrichtungen sind die miteinander zu verbindenden Bauteile in Werkzeugteilen eines Werkzeugs in der Vorrichtung angeordnet, wobei das Werkzeug zum Einlegen der Bauteile sowie zum Entnehmen der miteinander verbundenen Bauteile geöffnet und zum Verbinden der Bauteile bzw. für das hierfür erforderliche genaue Positionieren der Bauteile zueinander geschlossen werden kann. Die Werkzeugteile bilden Aufnahmen für die Bauteile, und zwar mit Anlage- und Zentriermittel für diese Bauteile.

Vielfach ist es erforderlich, die Bauteile so miteinander zu verbinden bzw. zu verkleben, daß sie beispielsweise im Bereich eines Randes entlang einer dortigen Klebelinie, dicht gegeneinander anliegen.

Aufgabe der Erfindung ist es, eine Vorrichtung aufzuzeigen, mit der ein derartiges Verkleben der Bauteile möglich ist, und zwar bei einwandfreier Justierung dieser Bauteile relativ zueinander für dieses Verkleben. Zur Lösung dieser Aufgabe ist eine Vorrichtung entsprechend dem Patentanspruch 1 ausgebildet.

Die erfindungsgemäße Vorrichtung ist derart ausgeführt, daß die Werkzeugteile bei geschlossenem Werkzeug eine genau definierte Lage zueinander aufweisen, d. h. an den Werkzeugteilen sind Anschlag- und Justiermittel vorgesehen, die den Abstand und die Lage der Werkzeugteile zueinander bei geschlossenem Werkzeug exakt festlegen, womit auch die Lage und Orientierung der von den Werkzeugteilen aufgenommenen Bauteile relativ zueinander exakt festgelegt ist. Das Anpressen der Werkzeugteile aneinander entlang des Bereichs, an dem sich die Werkzeugteile berühren sollen, erfolgt bei der erfindungsgemäßen Vorrichtung nicht durch die Schließbewegung des Werkzeugs, sondern dadurch, daß die Anlagefläche für Bauteile in einem Werkzeugteil zumindest teilweise von einem balg- oder membranartigen Wandabschnitt eines mit einem Druckmedium beaufschlagbaren Raumes gebildet ist, so daß selbst bei gewissen Toleranzen der Bauteile ein gesteuertes und schonendes Anpressen dieser Bauteile möglich ist und insbesondere auch bei einem gewünschten, nahezu nahtfreiem Aneinanderanschließen der Bauteile ein unerwünschtes Verformen dieser Bauteile, beispielsweise bei einem durch Toleranzen bedingten Übermaß, und damit eine Störung eines einwandfreien optischen Erscheinungsbildes nach dem Verbinden nicht eintreten. Dies ist insbesondere bei Verwendung der erfindungsgemäßen Vorrichtung zum Verbinden von solchen Fahrzeugteilen wesentlich, von denen wenigstens eines eine Sichtfläche bildet, an die hohe Qualitätsanforderungen gestellt wird.

Weiterbildungen der Erfindung sind Gegenstand der Unteransprüche. Die Erfindung wird im folgenden anhand der Figuren, die in sehr vereinfachter Darstellung und im Schnitt eine Vorrichtung gemäß der Erfindung zeigt, näher erläutert.

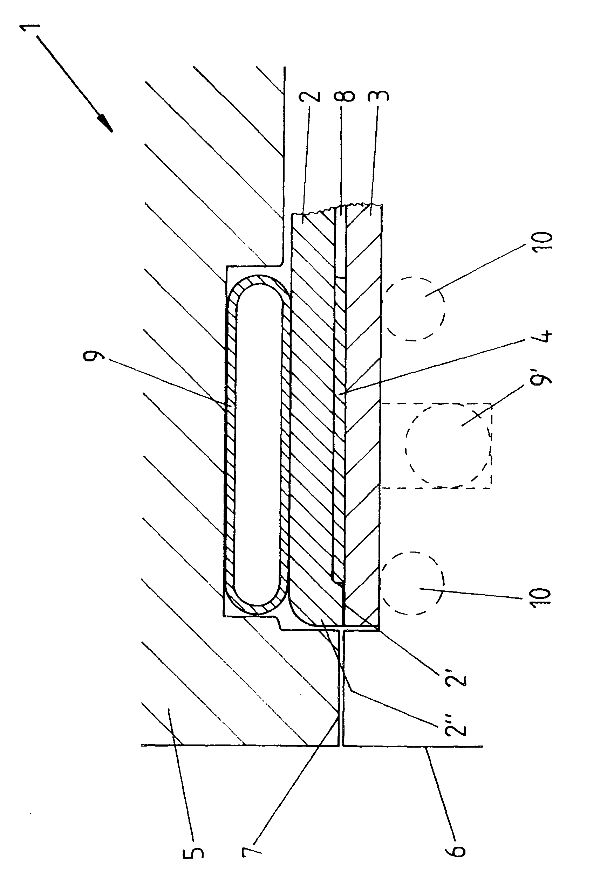

Die in der Figur allgemein mit 1 bezeichnete Vorrichtung dient zum Verbinden der beiden Bauteile 2 und 3 durch Verkleben mittels eines beispielsweise unter Einfluß von Wärme aushärtenden Klebers 4. Die Vorrichtung 1 besteht bei der dargestellten Ausführungsform aus den beiden Vorrichtungs- oder Werkzeugteilen 5 und 6, von denen zum Öffnen des Werkzeugs wenigestens ein Werkzeugteil, beispielsweise das obere Werkzeugteil 5 vom anderen Werkzeugteil 6 wegbewegt werden kann und die bei geschlossenem Werkzeug eine genau definierte Lage sowie einen beispielsweise durch Anschläge 7 genau definierten Abstand zueinander aufweisen.

Das obere Werkzeugteil 5 bildet eine Aufnahme für das obere Bauteil 2. Das untere Werkzeugteil 6 bildet eine Aufnahme für das untere Bauteil 3, und zwar jeweils in der Weise, daß die Bauteile 2 und 3 dort nicht nur gehalten, sondern auch lagegenau orientiert bzw. angeordnet sind. Bei geschlossenen Werkzeugteilen 5 und 6 liegt das Bauteil 2 mit der freien Kante 2' eines umgebogenen Randes 2" gegen die dem Bauteil 2 zugewandte Seite des Bauteils 3 an, wobei zwischen den Bauteilen 2 und 3 ein Klebespalt 8 mit einer definierten Dicke gebildet ist, die durch die Höhe des Randes 2" bestimmt ist.

Um die Bauteile 2 und 3 in der dargestellten Weise aneinanderzuhalten, ist im oberen Werkzeugteil 5 ein Balg oder flacher Schlauch 9 vorgesehen, der eine Anlage für dieses Werkzeugteil im Bereich des Randes 2" bildet und der mit einem unter Druck stehenden Fluid beaufschlagbar ist, so daß bei geschlossenen Werkzeugteilen 5 und 6 über den Druck im Schlauch 9 das Bauteil 2 mit seinem Rand 2" bzw. mit der dortigen Kante 2' gegen das Bauteil 3 angedrückt ist. Das im Schlauch 9 geführte Druckmedium ist beispielsweise ein Druckgas oder Druckluft.

Ist der im Klebespalt 8 vorhandene Kleber 4 ein unter Hitze aushärtender Kleber, so sind in den Werkzeugteilen 5 und weitere Mittel vorgesehen, um den Kleber 4 zu erhitzen. Für dies wird beispielsweise durch eine in die Werkzeugteile 5 und 6 integrierte und in der Figur allgemein mit 10 bezeichnete elektrische Heizeinrichtung oder aber dadurch erreicht, daß der Schlauch bzw. der schlauchartige Balg 9 mit einem heißen Fluid unter Druck, beispielsweise mit heißer Luft oder mit einem heißen Gas beaufschlagt wird und beispielsweise im Schlauch die Öffnungen für einen Austritt des Gases vorgesehen sind. Mit 9' ist in der Figur ein weiterer balgartiger Schlauch bezeichnet, der im unteren Werkzeugteil vorgesehen ist und der ebenfalls mit einem heißten Fluid beaufschlagbar ist, und zwar für das Aushärten des Klebers 4.

Um die Arbeits- oder Taktzeit zu verkürzen, kann die Ausbildung auch so getroffen sein, daß zum Abkühlen nach dem Aushärten des Klebers 4 der Schlauch 9 bzw. 9' mit einem nicht erhitzten bzw. kühleren Fluid beaufschlagt wird.

Die Erfindung wurde voranstehend an einem Ausführungsbeispiel beschrieben. Es versteht sich, daß Änderungen sowie Abwandlungen möglich sind, ohne daß dadurch der der Erfindung zugrundeliegende Erfindungsgedanke verlassen wird. So ist es beispielsweise auch möglich, anstelle des Schlauches 9 in dem Werkzeugteil 5 eine Nut vorzusehen, die dann an der dem Bauteil 2 zugewandten Seite durch eine bewegliche oder flexible Membrane dicht verschlossen ist, so daß der von der Nut gebildete Kanal mit dem unter Druck stehenden Fluid beaufschlagt werden kann, welches dann über die den Kanal zum Bauteil 2 hin verschließenden Membran bei geschlossenen Werkzeugteilen 5 und 6 den Anpreßdruck auf das Bauteil 2 ausübt.

Bei Verwendung von einem heißen Fluid, zugleich zum Aushärten des Klebers 4, sind dann in der Membrane Öffnungen für den Austritt dieses Fluids vorgesehen. In gleicher Weise kann auch der Schlauch 9' im Werkzeugteil 6 durch eine eine Nut bzw. einen nutenförmigen Kanal verschließenden Membran ersetzt sein.

### Bezugszeichenliste

- 1: Vorrichtung
- 2, 3: Bauteil
- 4: Kleber
- 5,6: Werkzeugteil
- 7: Anschlag
- 8: Klebespalt
- 9, 9': Schlauch oder Balg
- 10: Heizeinrichtung

## Patentansprüche

1. Vorrichtung zum Verbinden wenigstens zweier Bauteile (2, 3) durch Verkleben an einander benachbarten Flächen entlang eines Klebespaltes (8) oder eine Klebebereichs, mit zwei Werkzeugteilen (5, 6) zwischen den die Bauteile (2, 3) zum Verkleben angeordnet werden können und die Anlageflächen für die Bauteile (2, 3) bilden, **dadurch gekennzeichnet, daß** die Anlagefläche für ein erstes Bauteil (2) in einem ersten Werkzeugteil (5) zumindest teilweise von einem membran- oder balgartigen Wandabschnitt eines mit einem Druckmedium beaufschlagbaren Raumes gebildet ist.

2. Vorrichtung nach Anspruch 1, **dadurch gekennzeichnet, daß** der membran- oder balgartige Abschnitt die Wandung eines mit dem Druckmedium beaufschlagbaren Balgs oder eines mit dem Druckmedium beaufschlagbaren Schlauches ist.

3. Vorrichtung nach Anspruch 1 oder 2, **dadurch gekennzeichnet, daß** der membranoder balgartige Wandabschnitt eine einen Kanal oder Raum im ersten Werkzeugteil (5) abschließende Membrane ist.

4. Vorrichtung nach einem der vorhergehenden Ansprüche, **gekennzeichnet durch** Mittel (7), die bei geschlossenem Werkzeug (5/6) eine genaue relative Lage der Werkzeugteile (5, 6) zueinander definieren.

5. Vorrichtung nach einem der vorhergehenden Ansprüche, **dadurch gekennzeichnet, daß** das Druckmedium ein Druckgas oder Druckluft ist.

6. Vorrichtung nach einem der vorhergehenden Ansprüche, **gekennzeichnet durch** Mittel zum Erhitzen des Klebers (4) für ein Abbinden bzw. Aushärten.

7. Vorrichtung nach einem der vorhergehenden Ansprüche, **dadurch gekennzeichnet, daß** wenigstens ein Bauteil (2) einen über eine Oberflächenseite dieses Bauteils vorstehenden Rand (2") aufweist, mit dem dieses Bauteil entlang einer Klebelinie oder eines Klebebereichs durch den balg- oder membranartigen Wandabschnitt (9) gegen das andere Bauteil anpressbar ist.

8. Vorrichtung nach einem der vorhergehenden Ansprüche, **dadurch gekennzeichnet, daß** sich der membran- oder balgartige Wandabschnitt (9) entlang einer Klebelinie oder eines Klebebereichs erstreckt, an welchem die Bauteile (2, 3) miteinander verbunden werden sollen.
